# EUROPÄISCHE PATENTSCHRIFT

(11) **EP 2 036 423 B1**
(45) Veröffentlichungstag und Bekanntmachung des Hinweises auf die Patenterteilung: **24.08.2011**
(21) Anmeldenummer: 08158224.9
(22) Anmeldetag: 13.06.2008
(51) Int. Cl.: A01D 41/12

(54) **Mähdrescher mit Häckselgutverteiler**
Combine harvester with spreader for chopped crop
Moissonneuse-batteuse avec dispositif de diffusion de paille hachée

(30) Priorität: 12.09.2007 DE 102007043387
(43) Veröffentlichungstag der Anmeldung: 18.03.2009
(73) Patentinhaber: CLAAS Selbstfahrende Erntemaschinen GmbH, 33428 Harsewinkel (DE)
(72) Erfinder: Niermann, Martin, 33428, Harsewinkel (DE); Kucerin, Sergej, 32602, Vlotho (DE); Brinkmann, Jörn, 33428, Harsewinkel (DE)

(56) Entgegenhaltungen:
- EP-A- 0 631 717
- DE-A1- 10 029 715
- DE-A1- 10 133 965

## Beschreibung

Die vorliegende Erfindung betrifft einen Mähdrescher mit einem Häckselgutverteiler, der ausgedroschenes, gehäckseltes Stroh während der Ernte auf dem Acker verteilt.

Aus DE 100 29 715 A1 ist ein Häckselgutverteiler mit einem rotierenden Antrieb bekannt, über den eine Mehrzahl von über die gesamte Breite einer Häckselvorrichtung verteilt angeordneten Leitblechen zu einer Pendelbewegung angetrieben werden, um das Häckselgut abwechselnd in verschiedene Richtungen auszustreuen.

Idealerweise sollte der Häckselgutverteiler eines Mähdreschers das Häckselgut gleichmäßig auf einem Ackerstreifen verteilen, dessen Breite der Breite eines an dem Mähdrescher verwendeten Erntevorsatzes entspricht. Diese Anforderung ist umso schwieriger zu erfüllen, je breiter der Erntevorsatz ist. Wenn die Führungselemente des Verteilers den Häckselgutstrahl geradeaus nach hinten richten, lagert sich dieser auf einem der Breite der Häckslereinrichtung entsprechenden Ackerstreifen ab, unabhängig davon, wie weit das Häckselgut von dem Verteiler geworfen wird. Da in der Regel der Erntevorsatz breiter als die Häckslereinrichtung ist, muss das Häckselgut auch in seitlicher Richtung ausgestreut werden, um den abgeernteten Streifen gleichmäßig zu bedecken. Wenn jedoch die Führungselemente hin und herpendeln, so verteilt sich das Häckselgut auf einem Streifen, dessen Breite vom maximalen Ablenkwinkel und von der Wurfweite abhängt. Am Rand des Streifens landet nur der Anteil des Häckselgutes mit der größten Wurfweite, und zwar auch nur dann, wenn sich die Führungselemente in einer Anschlagstellung befinden. Daher neigt die Streudichte dazu, zum Rand des abgeernteten Ackerstreifens hin deutlich geringer zu werden als in dessen Mitte.

Um diesem Problem abzuhelfen, wurde in DE 101 33 965 A1 ein Häckselgutverteiler für einen Mähdrescher vorgeschlagen, bei dem Führungselemente zum Lenken des Häckselgutstromes über eine exzentrische Kurvenscheibe gesteuert sind. Indem die Kurvenscheibe die Schwenkgeschwindigkeit der Führungselemente in einer stark ausgelenkten Stellung kleiner als in einer wenig ausgelenkten Stellung macht, vergrößert sie den Anteil der Schwenkperiode des Häckselgutverteilers, in der dieser das Häckselgut bevorzugt in seitlicher Richtung streut.

Aufgabe der vorliegenden Erfindung ist, einen Häckselgutverteiler zu schaffen, der mit einfachen mechanischen Mitteln eine lange Verweildauer des Häckselgutstrahls in einer stark abgelenkten Orientierung zu steuern erlaubt.

Die Aufgabe wird dadurch gelöst, dass bei einem Häckselgutverteiler mit einem rotierenden Antrieb, einem pendelnd beweglichen Führungselement zum Steuern der Auswurfrichtung des Häckselguts und einer den Antrieb mit dem Führungselement verbindenden Koppeleinrichtung die Bewegungsfreiheit des Führungselements durch Anschläge begrenzt ist und die Koppeleinrichtung ein verformbares Element aufweist, welches durch die Antriebskraft des Drehantriebs verformbar ist, während sich das Führungselement in einer durch einen der Anschläge blockierten Stellung befindet. Aufgrund der Verformbarkeit der Koppeleinrichtung kann der Antrieb kontinuierlich rotieren, auch während das Führungselement durch einen der Anschläge blockiert ist. Gleichzeitig liegt das Führungselement für eine verlängerte Zeit in der Anschlagstellung an und sorgt so für eine verbesserte Versorgung der Randzonen des Streifens mit Häckselgut.

Einer bevorzugten Ausgestaltung zufolge ist die Verformbarkeit der Koppeleinrichtung durch ein Federelement gewährleistet.

Das elastisch dehn- und stauchbare Federelement kann beispielsweise in eine den Antrieb mit dem Führungselement verbindende Pleuelstange eingefügt sein.

Einer anderen Ausgestaltung zufolge umfasst die Koppeleinrichtung zwei federnd gekoppelte schwenkbare Hebelarme, von denen ein erster ein mit dem Antrieb verbundenes freies Ende hat und der zweite zwischen den Anschlägen beweglich ist und ein mit dem Führungselement verbundenes freies Ende hat.

Wenn einer dieser zwei Hebel zwei abstehende Flügel aufweist, zwischen denen sich der andere Hebel erstreckt, kann jeweils zwischen diesem anderen Hebel und jedem Flügel eine Feder angeordnet sein, um eine Ruhestellung der Hebel in Bezug zueinander festzulegen.

Einer weiteren Ausgestaltung zufolge kann einer der zwei Hebel als Blattfeder ausgebildet sein.

Zweckmäßigerweise umfasst die Koppeleinrichtung auch ein Dämpferelement. Ein solches Dämpferelement kann für sich allein die Verformbarkeit der Koppeleinrichtung gewährleisten; sie kann aber auch mit dem oben erwähnten Federelement kombiniert sein, um eventuell im Betrieb auftretende Schwingungen des Federelements zu dämpfen.

Um einen Häckselgutstrom mit hoher Geschwindigkeit und dementsprechend großer Wurfweite zu bilden, ist dem Häckselgutverteiler vorzugsweise eine Düse zum Formen eines aus einer Auslassöffnung der Düse entlang einer ersten Strahlachse austretenden Häckselgutstrahles vorgelagert, die zwei in einer zur Achse der Pendel-bewegung senkrechten Schnittebene zur Auslassöffnung hin konvergierende Seitenwände hat. Um eine Umlenkung des Häckselgutstrahls zur Seite mit möglichst geringem Geschwindigkeitsverlust zu ermöglichen, schließt die Pendelbewegungsfreiheit vorzugsweise zwei Stellungen ein, in denen jeweils eine von zwei den Häckselgutstrahl flankierenden Seitenwänden des Häckselgutverteilers eine benachbarte Seitenwand der Düse richtungsgleich verlängert.

In einer einfachen Ausgestaltung umfasst der Häckselgutverteiler zwei starr miteinander verbundene Seitenwände.

Eine kontinuierliche Führung des Häckselgutstrahls ist mit einem Häckselgutverteiler möglich, der zwei um voneinander verschiedene Achsen schwenkbare Seitenwände aufweist, die gekoppelt sind, um aus einer zueinander spiegelbildlichen Stellung jeweils in eine gleiche Richtung zu schwenken. Um eine Verengung des freien Querschnitts des Häckselgutverteilers in ausgelenkter Stellung zu vermeiden, ist die Kopplung zweckmäßigerweise so ausgelegt, dass die Winkelauslenkung der in Schwenkrichtung gelegenen Seitenwand jeweils größer ist als die der entgegen der Schwenkrichtung gelegenen Wand.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers mit einem Strohhäcksler und einem daran ange- schlossenen Verteiler zum Verteilen des gehäcksel- ten Strohs auf einem Acker;
- Fig. 2: einen schematischen Schnitt durch den Strohhäcks- ler und eine daran anschließende Düse;
- Fig. 3: eine schematische perspektivische Ansicht des Strohhäckslers, der Düse und des Verteilers gemäß einer ersten Ausgestaltung der Erfindung;
- Fig. 4: eine Draufsicht auf die Düse und den Verteiler der Fig. 3 in einer symmetrischen Stellung zum Auswer-
- Fig. 5: fen des gehäckselten Strohs entgegen der Fahrtrich- tung des Mähdreschers; eine Draufsicht auf die Düse und den Verteiler der Fig. 3 in einer zur Seite ausgelenkten Anschlagstel- lung;
- Fig. 6: eine schematische perspektivische Ansicht der Düse und des Verteilers gemäß einer zweiten Ausgestal- tung der Erfindung;
- Fig. 7: eine Draufsicht auf die Düse und den Verteiler der Fig. 6 in einer Stellung zum Auswerfen des gehäck- selten Strohs entgegen der Fahrtrichtung;
- Fig. 8: eine Draufsicht auf die Düse und den Verteiler der Fig. 6 in einer zur Seite ausgelenkten Anschlagstel- lung;
- Fig. 9: eine perspektivische Ansicht der Düse und des Ver- teilers gemäß einer dritten Ausgestaltung der Erfin- dung;
- Fig. 10: eine Abwandlung der Ausgestaltung aus Fig. 9;
- Fig. 11: eine perspektivische Ansicht der Düse und des Ver- teilers gemäß einer vierten Ausgestaltung der Erfin- dung;
- Fig. 12A, B, C: schematische Draufsichten auf eine erste Aus- gestaltung einer Koppeleinrichtung zum Antreiben einer Pendelbewegung der in den Fig. 3 bis 5, 6 bis 8, 9 bzw. 10 gezeigten Verteiler;
- Fig. 13: ein Diagramm zur Veranschaulichung des Bewe- gungsablaufs der Koppeleinrichtung;
- Fig. 14: eine Variante der Pleuelstange der Koppeleinrich- tung der Fig. 12A bis 12C;
- Fig. 15: ein zu Fig. 13 analoges Diagramm des Bewegungs- ablaufs bei Verwendung der Pleuelstange aus Fig. 14
- Fig. 16: eine perspektivische Ansicht einer zweiten Ausges- taltung der Koppeleinrichtung; und
- Fig. 17: eine zu Fig. 16 analoge Ansicht einer dritten Ausges- taltung der Koppeleinrichtung.

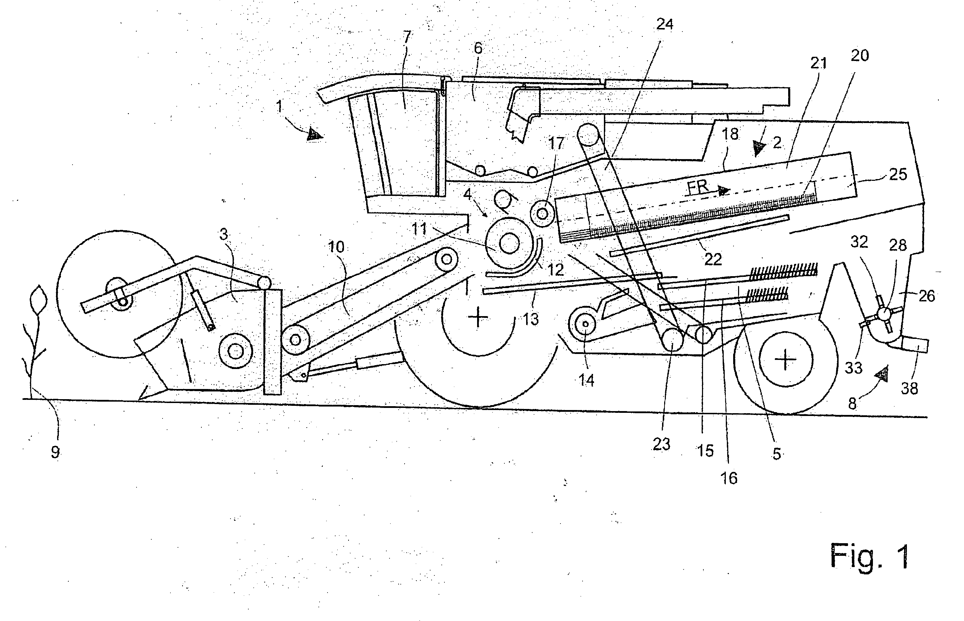

Der in Fig. 1 schematisch dargestellte Mähdrescher 1 hat als wesentliche Komponenten ein Schneidwerk 3 zum Schneiden und Aufnehmen von Erntegut 9, eine Drescheinrichtung 4, eine Reinigungseinrichtung 5, einen Axialabscheider 2, einen Korntank 6, eine Fahrerkabine 7 sowie einen dem Axialabscheider 2 nachgeordneten Strohhäcksler 8. Das vom Schneidwerk 3 abgeschnittene Erntegut 9 gelangt über einen Schrägförderkanal 10 zu der nach dem Tangentialprinzip arbeitenden Drescheinrichtung 4. Diese umfasst eine Dreschtrommel 11 und einen zugeordneten Dreschkorb 12. Die am Dreschkorb 12 abgeschiedenen Erntegutbestandteile werden über einen Förderboden 13 zu der Reinigungseinrichtung 5 geleitet, die hier ein Gebläse 14 und ein Ober- und Untersieb 15 bzw. 16 umfasst.

Das den Dreschkorb 12 in tangentialer Richtung verlassene Korn-Kurzstrohgemisch wird zum Axialabscheider 2 befördert. Eine parallel zur Dreschtrommel 11 angeordnete rotierende Wendetrommel 17 unterstützt den Fördervorgang. Der Axialabscheider 2 ist in Längsrichtung des Mähdreschers 1 angeordnet und besteht im Wesentlichen aus einem feststehenden, in Förderrichtung FR ansteigenden zylindrischen Gehäuse 18, in dem ein drehbar angetriebener, nicht dargestellter Rotor gelagert ist. Das Gehäuse 18 weist einen unteren Bereich mit Abscheiderosten 20 und einen geschlossenen oberen Deckbereich 21 mit an der Innenseite angeordneten Leiteinrichtungen zur Unterstützung der Förderbewegung des Erntegutes auf. Der Umfangsbereich des Rotors ist mit Zinken oder Leisten versehen, die den Abscheidevorgang intensivieren. An den Abscheiderosten 20 werden die im Erntegutgemisch enthaltenen Körner sowie Anteile von Kurzstroh und Spreu abgeschieden. Sie gelangen über den darunter liegenden Rücklaufboden 22 zur Reinigungseinrichtung 5. Die in letzterer gereinigten Körner werden über eine horizontale Förderschnecke 23 und einen Elevator 24 in den Korntank 6 gefördert.

Das Stroh wird im Axialabscheider 2 zu einer rückwärtigen Kante 25 desselben gefördert. Von der rückwärtigen Kante 25 fällt das Stroh in einen Trichter 26, an dessen Boden der Strohhäcksler 8 angeordnet ist. Am Ausgang des Axialabscheiders 2 strömt das Stroh nicht zeitlich und örtlich gleichmäßig verteilt über die Kante 25, sondern ist jeweils auf einzelne Abschnitte der Kante 25 konzentriert, deren Lage im Laufe der Zeit zufällig variiert.

Der Strohhäcksler 8 umfasst eine mit Messern 32 bestückte, um eine horizontale, quer zur Fahrtrichtung des Mähdreschers 1 orientierte Achse drehbare Welle 28 sowie gehäusefeste Messer 33. Die gehäusefesten Messer 33 sind in Fig. 1 in einer zwischen die rotierenden Messer 32 eingreifenden Stellung gezeigt; sie können aus dem Gehäuse des Häckslers 8 herausschwenkbar sein, um den Bedarf des Häckslers 8 an Antriebsenergie zu verringern, wenn die rotierenden Messer 32 allein eine hinreichende Zerkleinerung bewirken.

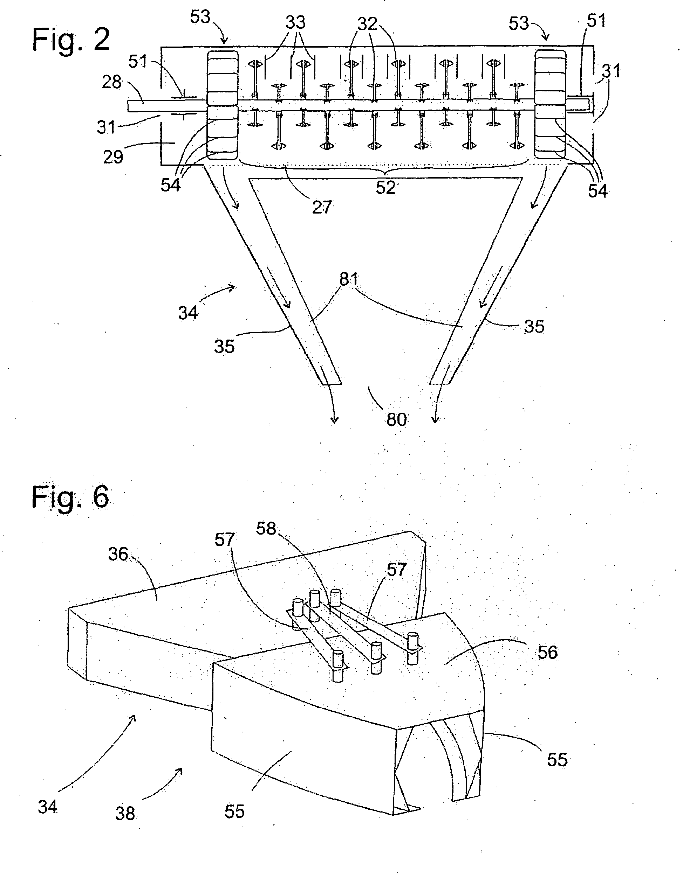

Fig. 2 zeigt einen schematischen Schnitt durch den Strohhäcksler 8. Ein Gehäuse 29 des Strohhäckslers 8 hat einen im Wesentlichen zylindrischen Hohlraum, in dem eine Welle 28 zwischen Lagern 51 drehbar gehalten ist. Die Welle zwischen den Lagern 51 ist in drei Abschnitte gegliedert, einem mit den Messern 32 bestückten mittleren Abschnitt 52, sowie daran angrenzende äußere Abschnitte 53, die mit radial abstehenden Luftschaufeln 54 besetzt sind.

Von den Messern 32, 33 zerkleinertes Stroh verlässt den Strohhäcksler 8 durch einen Auslassschlitz 27, der sich über die gesamte Breite der Wellenabschnitte 52, 53 erstreckt. Angetrieben von den hochtourig drehenden Messern 32 tritt das gehäckselte Stroh mit hoher Geschwindigkeit in eine sich an den Auslassschlitz 27 anschließende Düse 34 ein. Die rotierenden Luftschaufeln 54 saugen Außenluft durch Öffnungen 31 an den Stirnseiten des Strohhäckslergehäuses 29 ein und blasen sie ebenfalls in die Düse 34. Aufeinander zulaufende Seitenwände 35 der Düse 34 bündeln sowohl die von den Luftschaufeln 54 angetriebenen Luftströme als auch den Strom des Häckselguts, wobei durch Aufprall auf die Seitenwände 35 der Düse 34 abgebremstes Stroh von der an den Seitenwänden 35 entlang strömenden Luft wieder beschleunigt und mitgerissen wird. An einem Engpass 80 am stromabwärtigen Ende der Düse 34 wird durch die Querschnittsverengung ein Strom von gehäckseltem Stroh von im Wesentlichen gleichförmiger Dichte und gleichmäßigem Massendurchsatz erhalten, trotz einer eventuell ungleichmäßigen Verteilung des zu häckselnden Strohs entlang der Welle 28.

Die Seitenwände 35 der Düse 34 können durch eine geschlossene Bodenplatte miteinander verbunden sein; in der in Fig. 2 gezeigten Ausgestaltung ist das Innere der Düse nach unten hin offen, indem die Bodenplatte im Wesentlichen auf sich entlang der Seitenwände 35 erstreckende Stege 81 reduziert ist, die die von den Luftschaufeln 54 angetriebenen Luftströmungen gebündelt halten und durch Zusammenstöße miteinander oder mit den Seitenwänden 35 zu stark verlangsamte Strohteilchen auffangen, um deren Wiederbeschleunigung im Luftstrom zu ermöglichen. Der großflächige Ausschnitt zwischen den Stegen 81 verhindert, dass bei einem Ausschalten des Häckslers 8 Stroh in der Düse 34 zurückbleibt, das bei Wiederinbetriebnahme zu Verstopfungen führen könnte.

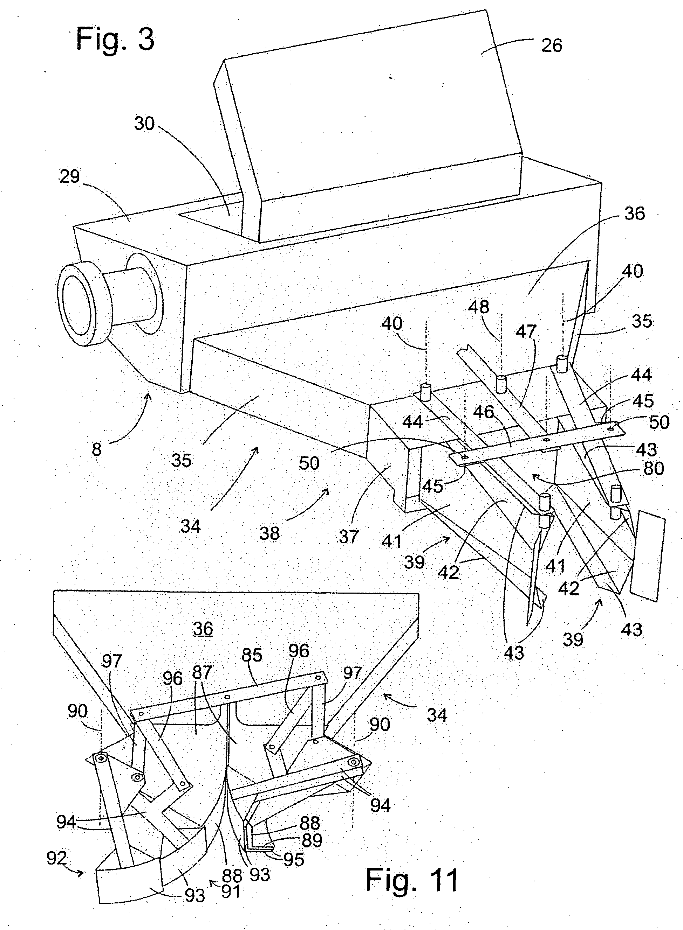

Fig. 3 zeigt den Strohhäcksler 8, die Düse 34 und einen daran angeschlossenen Verteiler 38 in einer schematischen perspektivischen Ansicht gemäß einer ersten Ausgestaltung der Erfindung. An der Oberseite des Gehäuses 29 des Strohhäckslers 8 ist ein Stück des Trichters 26 und einer Einfüllöffnung 30 sichtbar, durch die das zu häckselnde Stroh in das Gehäuse 29 gelangt; der Auslassschlitz 27 ist durch die Düse 34 verdeckt. Die vom Strohhäcksler 8 fort aufeinander zulaufenden Seitenwände 35 sind durch eine im Wesentlichen horizontale, geschlossene Oberseite 36 verbunden.

Indem die Seitenwände 35 den Strom des Häckselguts quer zur Fahrtrichtung des Mähdreschers bündeln, wird eine Vergleichmäßigung des Stroms, sowohl in zeitlicher als auch in räumlicher Hinsicht, erzielt, die die Neigung des Strohs, ungleichmäßig verteilt die Kante 25 zu passieren, ausgleicht und Voraussetzung für eine gleichmäßige Verteilung des gehäckselten Strohs auf dem Feld ist.

Rings um eine Auslassöffnung der Düse 34 ist ein Rahmen 37 montiert, an dem zwei Leitbleche 39 um vertikale, in etwa in Verlängerung der Seitenwände 35 liegende Achsen 40 schwenkbar aufgehängt sind. Die einander zugewandten Seiten der Leitbleche 39 sind konkav geformt, mit jeweils einem vertikalen, sich in Richtung des Häckselgutstrahls trapezförmig verjüngenden Mittelstück 41, an das Mittelstück 41 oben und unten im Querschnitt stumpfwinklig angrenzenden, sich in Strahlrichtung verbreiternden Seitenstücken 42 und wiederum an diese angrenzenden horizontalen Stegen 43. Diese Querschnittsform der Leitbleche 39 dient einer zusätzlichen Bündelung des Häckselgutstrahls in vertikaler Richtung beim Durchgang zwischen den Leitblechen 39.

Zwei Lenker 44 sind mit den freien Enden der oberen Stege 43 verbunden und zusammen mit den Leitblechen 39 um die Achsen 40 schwenkbar. Von den Lenkern 44 jeweils nach außen abstehende Arme 45 sind miteinander über einen Querbügel 46 gelenkig verbunden, an dem mittig ein dritter Lenker 47 eingreift, der seinerseits um eine mittig zwischen den Achsen 40 verlaufende Achse 48 schwenkbar ist. Der Lenker 47 ist in Fig. 2 als Bruchstück dargestellt. Ein am nicht dargestellten Ende des Lenkers 47 angreifender Antriebsmechanismus wird an späterer Stelle beschrieben.

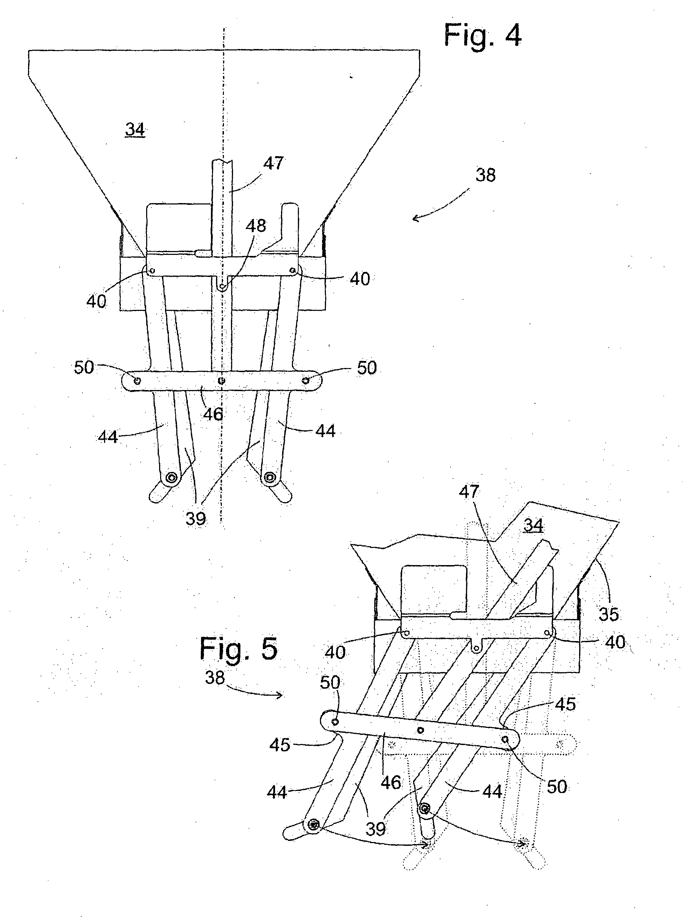

Fig. 4 zeigt die Düse 34 und den von dem Rahmen 37 und den Leitblechen 39 gebildeten Verteiler der Fig. 3 in einer Draufsicht. Die beiden Leitbleche 39 liegen sich bezüglich einer Symmetrieebene der Düse 34 spiegelbildlich gegenüber und bündeln den aus der Düse 34 austretenden Häckselgutstrahl, ohne dessen durch die Düse 34 vorgegebene Richtung zu verändern.

Fig. 5 zeigt denselben Verteiler 38 mit in eine linke Anschlagstellung ausgelenkten Leitblechen 39. Das rechte Leitblech 39 verlängert richtungsgleich die rechte Seitenwand 35 der Düse. Häckselgut, das bereits an der rechten Seitenwand 35 abgelenkt worden ist, prallt daher nicht erneut auf die Leitbleche 39, so dass eine unnötige Abbremsung der Häckselguts vermieden und eine große Wurfweite, allein durch den dem Häckselgut im Strohhäcksler 8 verliehenen Impuls und unterstützt durch die Luftströmungen von den Luftschaufeln 54, erreicht werden kann.

Da der Abstand zwischen den den Querbügel 46 mit den Armen 45 verbindenden Gelenken 50 größer ist als zwischen den Achsen 40, ist in der gezeigten Stellung die Winkelauslenkung des linken Leitblechs 39 größer als die des rechten. Der Abstand der Gelenke 50 voneinander ist so angepasst, dass die lichte Weite des von den Leitblechen 39 begrenzten Durchgangs in der Anschlagstellung der Fig. 5 nicht kleiner und vorzugsweise im Wesentlichen genauso groß ist wie in der symmetrischen Stellung der Fig. 4, um den Durchtritt des Häckselgutstrahls auch in der Anschlagstellung so wenig wie möglich zu beeinträchtigen.

Fig. 6 zeigt eine perspektivische Ansicht der Düse 34 zusammen mit einer zweiten Ausgestaltung des Verteilers. Die Düse 34 ist dieselbe wie mit Bezug auf Fig. 2 und 3 bereits beschrieben; die an ihren einander zugewandten Oberflächen konvexen Leitbleche 55 des Verteilers 38 sind durch eine Deckplatte 56 zu einer starren Einheit verbunden. Diese starre Einheit ist wie die Düse 34 unterseits offen, um auszuschließen, dass Häckselgut darin hängen bleibt und den Weg des Strahls verstopfen kann.

Drei jeweils schwenkbar mit der Deckplatte 56 und der Oberseite 36 der Düse 34 verbundene Lenker 57, 58, 57 tragen den Verteiler 38.

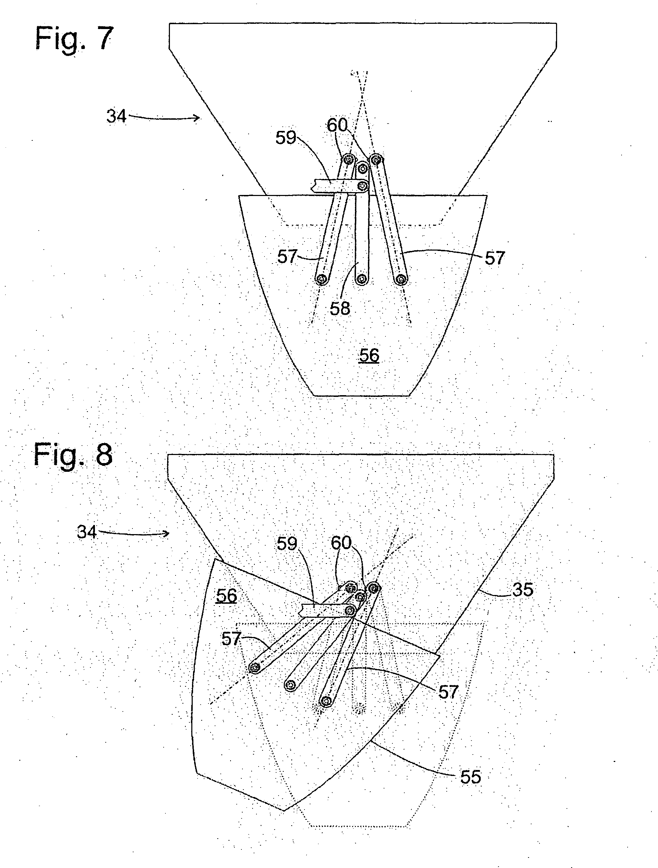

Wie in der Draufsicht der Fig. 7 gezeigt, greift an dem mittleren Lenker 58 eine Pleuelstange 59 einer ansonsten nicht dargestellten Antriebsvorrichtung ein, um eine Pendelbewegung der Leitbleche 55 zwischen der in Fig. 7 gezeigten spiegelsymmetrischen Mittelstellung und jeweils nach rechts bzw. links ausgelenkten Anschlagstellungen anzutreiben, von denen die nach links ausgelenkte in Fig. 8 gezeigt ist. Die in Strahlrichtung auseinander laufenden äußeren Lenker 57 führen die Schwenkbewegung der Leitbleche 55, wobei die momentane Schwenkachse jeweils durch den Schnittpunkt der Längsachsen der beiden Lenker 57 festgelegt ist. In der Oberseite 36 der Düse sind die beiden äußeren Lenker 57 jeweils in Langlöchern 60 verschiebbar.

Verteilers

Auch in dieser Ausgestaltung sind die Anschlagstellungen der Schwenkbewegungsfreiheit des Verteilers 38 so festgelegt, dass wie in Fig. 8 gezeigt jeweils eine Seitenwand 35 der Düse 34 durch ein jeweils angrenzendes Leitblech 55 des Verteilers 38 richtungsgleich verlängert wird.

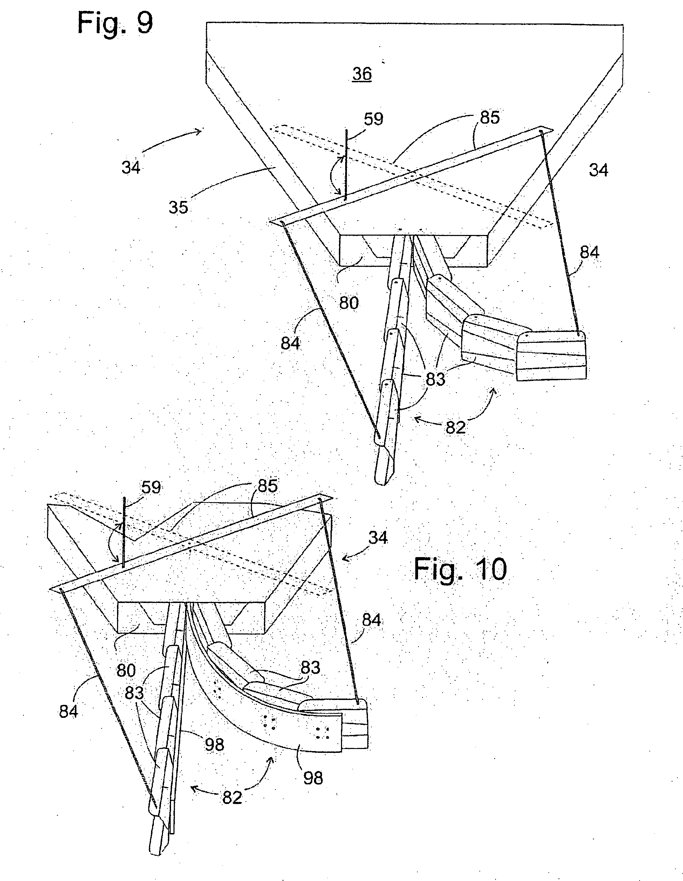

Fig. 9 zeigt eine perspektivische Ansicht der Düse 34 und des daran angeschlossenen Verteilers 38 gemäß einer dritten Ausgestaltung der Erfindung. Zwei aus gelenkig verbundenen Segmenten 83 zusammengesetzte Leitbleche 82 erstrecken sich von der Mitte des Engpasses 80 der Düse 34 aus. Die der Düse 34 zugewandte Kante eines jeden Segments 83 mit Ausnahme des vordersten ist durch das jeweils davorliegende, teilweise überlappende Segment vor dem Strahl des Häckselguts abgeschirmt. An dem am weitesten von der Düse 34 entfernten Segment 83 der zwei Leitbleche 82 greift jeweils ein stabförmiger Lenker 84 an. Die beiden Lenker 84 sind über einen Querbügel 85 verbunden. Der Querbügel ist in Richtung eines Pfeils zwischen der Fig. 9 aus durchgezogener im Umriss gezeigten Stellung und einer als gestrichelter Umriss dargestellten Stellung pendelnd beweglich und durch eine Pleuelstange 59 angetrieben. In der durchgezogen gezeigten Stellung hält der Querbügel 85 das linke Leitblech 82 geradlinig ausgestreckt, so dass ein die linke Hälfte des Engpasses 80 passierender Teil des gehäckselten Strohs nicht umgelenkt und geradeaus nach hinten ausgestreut wird. Das rechte Leitblech 82 hingegen ist in einer stark gekrümmten Konfiguration gehalten, in der der die rechte Hälfte des Engpasses 80 passierende Teil des Strohs nach rechts geworfen wird. Wenn sich der Querbügel 85 in der gestrichelten Stellung befindet, wird das Stroh über die rechte Hälfte des Engpasses 80 geradeaus ausgeworfen, während der die linke Hälfte passierende Anteil nach links geworfen wird.

Die einzelnen Segmente 83 haben jeweils an ihrer dem Häckselgutstrahl zugewandten Oberfläche einen konkaven Querschnitt ähnlich dem der Leitbleche 39, um wie diese das abgelenkte Häckselgut in vertikaler Richtung zu bündeln.

Fig. 10 zeigt den Verteiler 38 und einen Teil der Düse 34 gemäß einer gegenüber Fig. 9 leicht abgewandelten Ausgestaltung. Die Segmente 83 sind hier nicht wie in Fig. 9 jeweils miteinander durch Gelenke verbunden, sondern sie sind jeweils einzeln an einem langgestreckten elastischen Element 98, etwa einem Streifen aus Federblech oder aus Elastomermaterial, befestigt. Das elastische Element 98 verhindert abrupte Knicke in den Leitblechen 82, die zu einer unerwünscht starken Abbremsung des Häckselgutstrahls führen könnten. Die Bewegung der Leitbleche 82 ist in derselben Weise gesteuert, wie mit Bezug auf Fig. 9 beschrieben.

Eine vierte Ausgestaltung, die ähnlich wie die der Fig. 9 wirkt, ist in Fig. 11 dargestellt. Hier sind an der Oberseite 36 der Düse 34 Oberseiten zweier zueinander spiegelbildlicher Führungselemente 87 befestigt, die jeweils eine kreisbogenförmig von der Mitte des in der Fig. verdeckten Engpasses 80 ausgehende Seitenwände 88 sowie einen an den unteren Rand der Seitenwand 88 anschließenden Steg 89 aufweisen. Die Krümmung der Seitenwand 88 definiert eine Achse 90, um die mehrere weitere Führungselemente 91, 92 schwenkbar sind. Diese umfassen ebenfalls jeweils eine kreisbogenförmig gekrümmte Seitenwand 93, einen Schwenkarm 94, der am oberen Rand der Seitenwand 93 angreift und sie mit der Achse 90 verbindet, sowie einen Steg 95 entlang des unteren Randes der Seitenwand 93. Die Führungselemente 91, 92 sind mit Hilfe eines schwenkbaren Querbügels 85 pendelnd beweglich.

Fig. 11 zeigt in ihrer rechten Hälfte die Führungselemente 87, 91, 92 in einer teleskopisch übereinander geschobenen Stellung, in der die Führungselemente 91, 92 außen um das Führungselement 87 herum greifen und den Strom des Häckselguts nicht beeinflussen. Es wird daher lediglich durch das Führungselement 87 geringfügig nach rechts abgelenkt. Die linken Führungselemente 91, 92 befinden sich hingegen in einer ausgefahrenen Anschlagstellung, in der ihre Seitenwände 93 minimal miteinander und mit der Seitenwand 88 des Führungselements 87 überlappen und so das sie passierende Häckselgut maximal zur Seite ablenken.

Um die koordinierte Bewegung der Führungselemente 91, 92 zwischen ihren zwei Anschlagstellungen zu steuern, ist jedes von ihnen über einen eigenen Lenker 96, 97 mit dem Querbügel 85 verbunden. Indem der Lenker 97 des äußeren Führungselements 92 an dessen Schwenkarm 94 mit einem deutlich kürzeren Hebel angreift als der Lenker 96 am Schwenkarm 94 des Führungselements 91, werden unterschiedliche übersetzungsverhältnisse zwischen der Drehung des Querbügels 85 und der der Führungselemente 91, 92 erreicht, so dass die Führungselemente 91, 92 zwischen der auf der rechten Seite der Fig. gezeigten teleskopisch übereinander geschobenen Stellung und einer aufgefächerten Stellung, wie auf der linken Seite der Fig. gezeigt, beweglich sind.

Im Folgenden werden verschiedene Ausgestaltungen von Antriebs-oder Kopplungsvorrichtungen beschrieben, die in gleicher Weise für die Verteiler 38 der Fig. 3 bis 5, 6 bis 8, 9, 10 bzw. 11 geeignet sind.

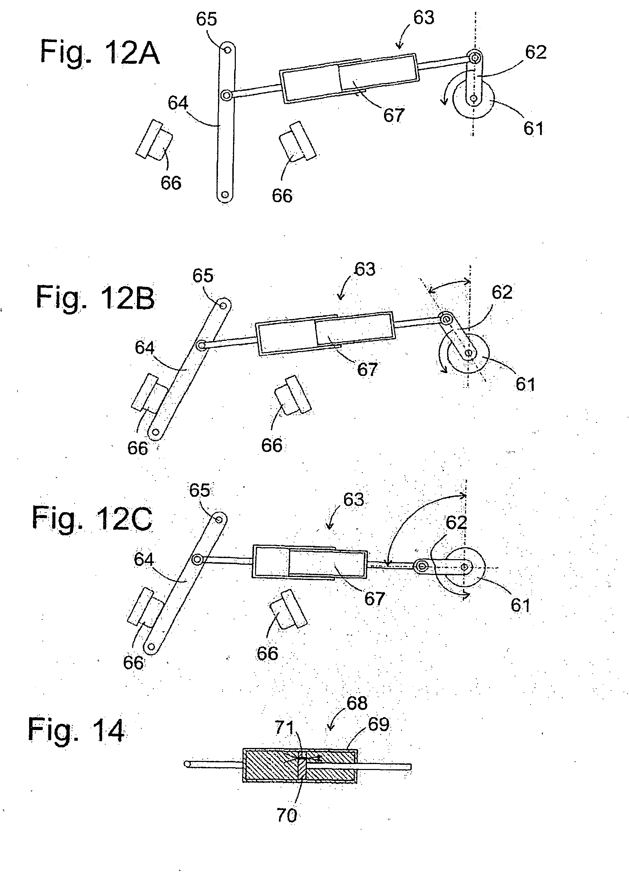

Das Grundprinzip der Antriebs- bzw. Kopplungsvorrichtung wird zunächst anhand der Fig. 12A bis 12C erläutert. In diesen Figuren ist mit 61 ein Motor oder ein beliebiger anderer Drehantrieb bezeichnet, der direkt oder indirekt eine Drehung eines Arms 62 antreibt und so ein an ein freies Ende des Arms 62 angelenktes Ende einer Pleuelstange 63 auf einer Kreisbahn bewegt. Das zweite Ende der Pleuelstange 63 greift an einem Arm 64 an, der um eine Achse 65 zwischen zwei Anschlägen 66 schwenkbar ist. In der Stellung der Fig. 12A befindet sich der Arm 64 in einer Mittelstellung zwischen den zwei Anschlägen 66.

Ein in die Pleuelstange 63 eingefügtes elastisch längenveränderliches Federelement 67 befindet sich in einer entspannten Stellung. Das Federelement 67 kann zum Beispiel durch ein in einem Zylinder eingeschlossenes Gasvolumen, eine zwischen ineinander greifenden Hülsen linear geführte Schraubenfeder oder dergleichen gebildet sein.

Fig. 12B zeigt eine Konfiguration des Antriebsmechanismus, in der der Arm 62 soweit im Gegenuhrzeigersinn weiter gedreht ist, dass der Arm 64 an den linken Anschlag 66 stößt. Der Arm 62 rotiert vom Motor 61 angetrieben weiter, doch da der Arm 64 nicht weiter ausgelenkt werden kann, führt dies zu einer Stauchung des Federelements 67. Fig. 12C zeigt den maximal gestauchten Zustand des Federelements 67, in dem die Pleuelstange 63 mit dem Arm 62 eine gerade Linie bildet.

Wenn der Arm 62 aus der Konfiguration der Figur 12C weiter rotiert, streckt sich zunächst das Federelement 67 wieder aus, bis es wieder den entspannten Zustand erreicht hat, erst dann folgt der Arm 64 der Drehung des Arms 62, bis er am rechten Anschlag 66 erneut gestoppt wird. Während der Arm 64 am rechten Anschlag 66 festgehalten wird, wird das Federelement 67 elastisch gedehnt. Nach Rückkehr des Federelements 67 in den entspannten Zustand wird schließlich die Konfiguration der Fig. 12A wieder erreicht.

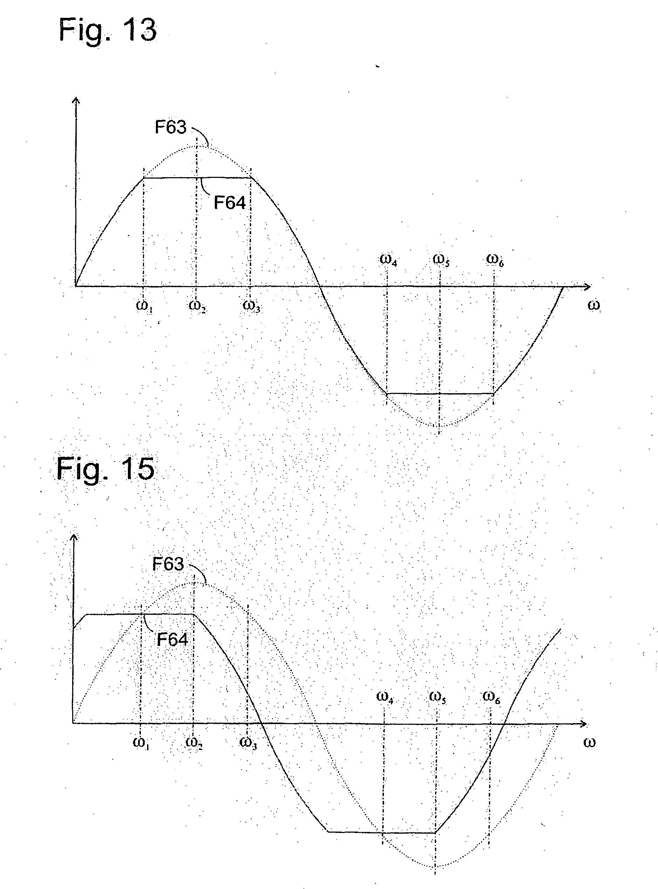

Fig. 13 veranschaulicht den Zusammenhang zwischen der Drehung des Arms 62 und der Pendelbewegung des Arms 64. Die in dem Diagramm der Fig. 13 mit F63 bezeichnete Kurve bezeichnet die Koordinate des den Arm 62 mit der Pleuelstange 63 verbindenden Gelenks bezogen auf die Längsrichtung der Pleuelstange 63 in Fig. 12C. Wenn der Arm 62 mit gleichförmiger Geschwindigkeit rotiert, hat die Kurve F63 bekanntlich einen sinusförmigen Verlauf. Die Kurve F64, die die entsprechende Koordinate des Gelenks zwischen Pleuelstange 63 und Arm 64 angibt, folgt dem Verlauf der Kurve F63 so lange, bis der Arm 64 am Drehwinkel □₁ die Stellung der Fig. 12B erreicht. Von diesem Punkt an bleibt der Arm 64 so lange in Ruhe, bis nach Durchgang des Arms 62 durch den Totpunkt □₂ das Federelement 67 bei □₃ wieder entspannt ist. Dasselbe wiederholt sich zwischen □₄ und □₆, wenn der Arm 62 den zweiten Totpunkt □₅ seiner Bewegung an der von dem Arm 64 abgewandten Seite durchläuft.

Als längenveränderliches Element muss nicht unbedingt ein Federelement verwendet werden; Fig. 14 zeigt eine Variante der Pleuelstange 63, die als längenveränderliches Element einen Dämpfer 68, hier in Form eines fluidgefüllten Zylinders 69, in dem ein Kolben 70 mit einer Drosselstelle 71 verschiebbar ist, umfasst. Wenn die mit einem solchen Dämpfer 68 versehene Pleuelstange 63 die Konfiguration der Fig. 12B erreicht, beginnt der vom Arm 62 angetriebene Kolben 70, sich in dem Zylinder 69 zu verschieben, wobei das Fluid die Drosselstelle 71 passiert. Der Strömungswiderstand des Fluids an der Drosselstelle 71 ist so bemessen, dass unmittelbar nach Passieren der Konfiguration der Fig. 12C die Pleuelstange 63 den Arm 64 vom linken Anschlag 66 fortzieht. Erst wenn der Arm auf den rechten Anschlag 66 trifft, beginnt die Pleuelstange 63, sich wieder zu dehnen.

Fig. 15 zeigt ein zu Fig. 13 analoges Diagramm für den in Fig. 14 gezeigten Fall der Pleuelstange 63 mit Dämpfer 68. Da der Arm 64 bei dieser Ausgestaltung sich sofort wieder zu bewegen beginnt, wenn der Arm 62 einen Totpunkt □₂ oder □₅ passiert hat, ergibt sich eine Phasenverschiebung zwischen den zwei Kurven F63 und F64; die Gestalt, d.h. der zeitliche Verlauf der Bewegungen der Arme 62, 64, ist jedoch in beiden Fällen der gleiche.

Es ist leicht vorstellbar, dass Dämpfer und Federelement in der Pleuelstange kombiniert sein können, um z.B. jeweils bei Lastwechsel auftretende Schwingungen des Federelements zu dämpfen.

Der angetriebene Arm 64 kann jeweils mit dem Lenker 47 aus Fig. 3 oder dem Lenker 58 aus Fig. 6 identisch sein (wobei in letzterem Fall die Pleuelstange 63 der Fig. 12A mit der Pleuelstange 59 der Fig. 7 oder 8 gleich gesetzt werden kann), oder er kann in beliebiger geeigneter Weise, zum Beispiel über die in Fig. 8 bzw. 9 gezeigte Pleuelstange 59, an den Lenker 47 bzw. 58 oder an den Querbügel 85 der Fig. 9 oder 10 gekoppelt sein.

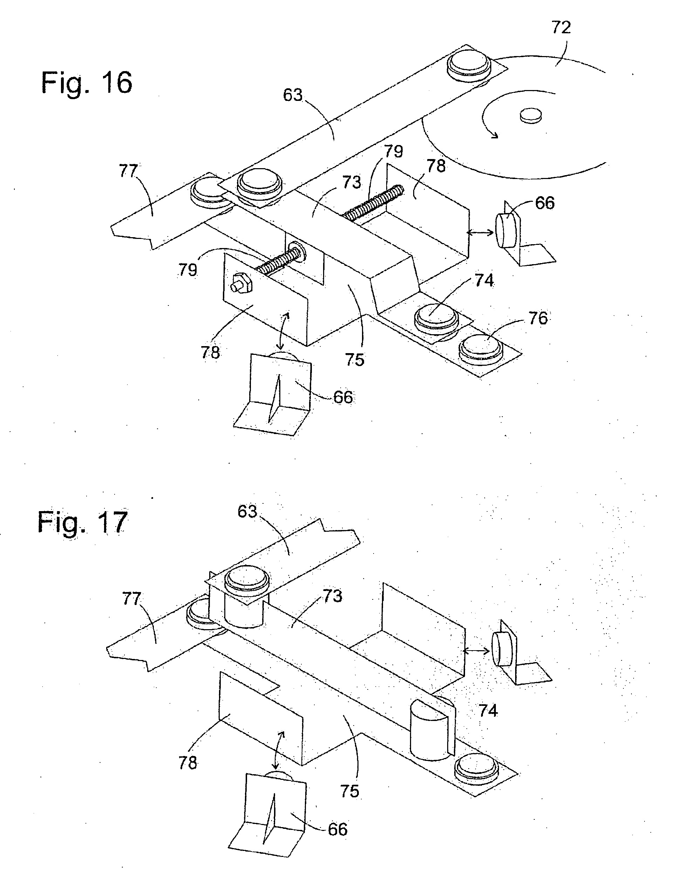

Eine bevorzugte Ausgestaltung des Antriebsmechanismus ist in Fig. 16 in einer schematischen perspektivischen Ansicht dargestellt. Eine drehangetriebene Scheibe, deren Funktion der des Arms 62 in Fig. 12A entspricht, ist mit 72 bezeichnet. Die Pleuelstange 63 koppelt die Scheibe 72 an ein freies Ende eines ersten Schwenkarms 73, der an seinem entgegen gesetzten Ende 74 an einen zweiten Schwenkarm 75 angelenkt ist. Der Schwenkarm 75 ist in Draufsicht in etwa kreuzförmig, wobei ein dem Ende 74 des Schwenkarms 73 benachbartes Ende 76 an ein nicht dargestelltes ortsfestes Trägerteil, zum Beispiel die Oberseite 36 der Düse 34, angelenkt ist und ein entgegen gesetztes Ende an einer Koppelstange 77 angelenkt ist, die wiederum am Lenker 47 oder 58 angreift. Der Querbalken des kreuzförmigen Schwenkarms 75 hat an seinen Enden zwei hochgebogene Laschen 78, die einerseits vorgesehen sind, um in den Anschlagstellungen des Schwenkarms 75 mit einem der Anschläge 66 in Kontakt zu kommen, und die zwei spiegelbildlich zueinander gegen den Schwenkarm 73 gerichtete Federelemente 79 tragen. Die Federelemente 79 umfassen jeweils eine durch eine Schraube gegen den Schwenkarm 73 vorgespannt gehaltene Schraubenfeder. Solange der Schwenkarm 75 keinen Anschlag 66 berührt, verhalten sich die beiden Schwenkarme 73, 75 wie eine starre Einheit, die die Bewegung der Pleuelstange 63 auf die Koppelstange 77 überträgt. Sobald der Schwenkarm 75 einen jeweils einer maximal nach rechts bzw. links ausgelenkten Stellung des Verteilers entsprechenden Anschlag 66 erreicht, bleibt die Koppelstange 77 stehen, und der Arm 73 schwenkt gegen den Arm 75, wobei er eines der Federelemente 79 staucht.

Fig. 17 zeigt eine abgewandelte Ausgestaltung des Antriebsmechanismus, die sich von derjenigen der Fig. 16 im Wesentlichen dadurch unterscheidet, dass der Schwenkarm 73 als eine Blattfeder ausgebildet ist. Die Blattfeder 73 ist an ihrem Ende 74 torsionssteif mit dem Schwenkarm 75 verbunden, und an ihr freies Ende ist schwenkbar die Pleuelstange 63 angekoppelt. Solange sich der Schwenkarm 75 zwischen den Anschlägen 66 bewegt, verformt sich der Schwenkarm 73 im Wesentlichen nicht; erst wenn der Schwenkarm 75 an einem der Anschläge 66 anliegt, biegt sich der Schwenkarm 73, um eine kontinuierliche Weiterbewegung der Pleuelstange 63 zu ermöglichen, während gleichzeitig die Koppelstange 77 und mit ihr die von ihr gesteuerten Leitbleche 39, 55, 82 in einer Anschlagstellung in Ruhe bleiben.

### Bezugszeichen

- 1: Mähdrescher
- 2: Axialabscheider
- 3: Schneidwerk
- 4: Drescheinrichtung
- 5: Reinigungseinrichtung
- 6: Korntank
- 7: Fahrerkabine
- 8: Strohhäcksler
- 9: Erntegut
- 10: Schrägförderkanal
- 11: Dreschtrommel
- 12: Dreschkorb
- 13: Förderboden
- 14: Gebläse
- 15: Obersieb
- 16: Untersieb
- 17: Wendetrommel
- 18: Gehäuse
- 19 20: Abscheiderost
- 21: Deckbereich
- 22: Rücklaufboden
- 23: Förderschnecke
- 24: Elevator
- 25: Kante
- 26: Trichter
- 27: Auslassschlitz
- 28: Welle
- 29: Gehäuse
- 30: Einfüllöffnung
- 31: Öffnung
- 32: rotierende Messer
- 33: gehäusefeste Messer
- 34: Düse
- 35: Seitenwand
- 36: Oberseite
- 37: Rahmen
- 38: Verteiler
- 39: Leitbleche
- 40: Achse
- 41: Mittelstück
- 42: Seitenstücke
- 43: Steg
- 44: Lenker
- 45: Arm
- 46: Querbügel
- 47: Lenker
- 48: Achse
- 49: Symmetrieebene
- 50: Gelenk
- 51: Lager
- 52: mittlerer Abschnitt
- 53: äußerer Abschnitt
- 54: Luftschaufel
- 55: Leitbleche
- 56: Deckplatte
- 57: Lenker
- 58: Lenker
- 59: Pleuelstange
- 60: Langloch
- 61: Motor
- 62: Arme
- 63: Pleuelstange
- 64: Arm
- 65: Achse
- 66: Anschlag
- 67: Federelement
- 68: Dämpfer
- 69: Zylinder
- 70: Kolben
- 71: Drosselstelle
- 72: Scheibe
- 73: Schwenkarm
- 74: Ende
- 75: Schenkarm
- 76: Ende
- 77: Koppelstange
- 78: Lasche
- 79: Federelement
- 80: Engpass
- 81: Steg
- 82: Leitblech
- 83: Segment
- 84: Lenker
- 85: Querbügel
- 86: Pfeil
- 87: Führungselement
- 88: Seitenwand
- 89: Steg
- 90: Achse
- 91: Führungselement
- 92: Führungselement
- 93: Seitenwand
- 94: Schwenkarm
- 95: Steg
- 96: Lenker
- 97: Lenker
- 98: elastisches Element

## Patentansprüche

1. Mähdrescher mit einem Häckselgutverteiler (38), der einen rotierenden Antrieb (61), ein pendelnd bewegliches Führungselement (39,55,82,91,92) zum Steuern der Auswurfrichtung des Häckselguts und eine den Antrieb (61) mit dem Führungselement (39,55,82,91,92) verbindende Koppeleinrichtung umfasst, **dadurch gekennzeichnet, dass** die Bewegungsfreiheit des Führungselements (39,55,82,91,92) durch Anschläge (66) begrenzt ist und die Koppeleinrichtung ein verformbares Element (67,68,73,79) aufweist, welches durch die Antriebskraft des Drehantriebs (61) verformbar ist, während sich das Führungselement (39,55,82,91,92) in einer durch einen der Anschläge (66) blockierten Stellung befindet.

2. Mähdrescher nach Anspruch 1, **dadurch gekennzeichnet, dass** das verformbare Element der Koppeleinrichtung ein Federelement (67,73,79) umfasst.

3. Mähdrescher nach Anspruch 2, **dadurch gekennzeichnet, dass** das elastisch dehn- und stauchbare Federelement (67) in eine den Antrieb mit dem Führungselement (39,55,82,91,92) verbindende Pleuelstange (63) eingefügt ist.

4. Mähdrescher nach Anspruch 2, **dadurch gekennzeichnet, dass** die Koppeleinrichtung zwei federnd gekoppelte schwenkbare Hebelarme (63, 64; 73, 75) umfasst, von denen ein erster (63) ein mit dem Antrieb (61) verbundenes freies Ende hat und der zweite (64; 75) zwischen den Anschlägen (66) beweglich ist und ein mit dem Führungselement (39, 55, 82, 91, 92) verbundenes freies Ende hat.

5. Mähdrescher nach Anspruch 4, **dadurch gekennzeichnet, dass** einer (75) der zwei Hebel (73, 75) zwei abstehende Flügel (78) aufweist, zwischen denen sich der andere Hebel (73) erstreckt, und dass zwischen dem anderen Hebel (73) und jedem Flügel (78) jeweils eine Feder (79) angeordnet ist.

6. Mähdrescher nach Anspruch 4, **dadurch gekennzeichnet, dass** einer (73) der zwei Hebel (73; 75) als Blattfeder ausgebildet ist.

7. Mähdrescher nach einem der vorhergehenden Ansprüche, **dadurch gekennzeichnet, dass** das verformbare Element der Koppeleinrichtung ein Dämpferelement (68) umfasst.

8. Mähdrescher nach einem der vorhergehenden Ansprüche, **dadurch gekennzeichnet, dass** dem Verteiler (38) eine Düse (34) zum Formen eines aus einer Auslassöffnung der Düse (34) entlang einer ersten Strahlachse austretenden Häckselgutstrahles mit zwei in einer zur Achse der Pendelbewegung senkrechten Schnittebene zur Auslassöffnung hin konvergierenden Führungselementen (39,55) vorgelagert ist und dass die Pendelbewegungsfreiheit zwei Stellungen einschließt, in denen jeweils eines von zwei den Häckselgutstrahl flankierenden Führungselementen (39,55) des Verteilers (38) eine benachbarte Seitenwand (35) der Düse (34) richtungsgleich verlängert.

9. Mähdrescher nach einem der vorhergehenden Ansprüche, **dadurch gekennzeichnet, dass** das Führungselement des Verteilers (38) zwei starr miteinander verbundene Seitenwände (55) umfasst.

10. Mähdrescher nach einem der Ansprüche 1 bis 8, **dadurch gekennzeichnet, dass** das Führungselement des Verteilers (38) zwei um voneinander verschiedene Achsen (40) schwenkbare Seitenwände (39) aufweist, die gekoppelt sind, um aus einer zueinander spiegelbildlichen Stellung jeweils in eine gleiche Richtung zu schwenken,

11. Mähdrescher nach Anspruch 10, **dadurch gekennzeichnet, dass** die Winkelauslenkung der in Schwenkrichtung gelegenen Seitenwand (39) jeweils größer ist als die der entgegen der Schwenkrichtung gelegenen Wand (39).

## Claims

1. A combine harvester having a chopped straw distributor (38) which includes a rotating drive (61), a swingingly movable guide element (39, 55, 82, 91, 92) for controlling the ejection direction of the chopped straw and a coupling device connecting the drive (61) to the guide element (39, 55, 82, 91, 92), **characterised in that** the freedom of movement of the guide element (39, 55, 82, 91, 92) is limited by abutments (66) and the coupling device has a deformable element (67, 68, 73, 79) deformable by the drive force of the rotary drive (61) while the guide element (39, 55, 82, 91, 92) is in a position of being blocked by one of the abutments (66).

2. A combine harvester according to claim 1 **characterised in that** the deformable element of the coupling device includes a spring element (67, 73, 79).

3. A combine harvester according to claim 2 **characterised in that** the elastically stretchable and upsettable spring element (67) is inserted into a connecting rod (63) connecting the drive to the guide element (39, 55, 82, 91, 92).

4. A combine harvester according to claim 2 **characterised in that** the coupling device includes two resiliently coupled pivotable lever arms (63, 64; 73, 75) of which a first (63) has a free end connected to the drive (61) and the second (64; 75) is movable between the abutments (66) and has a free end connected to the guide element (39, 55, 82,91,92).

5. A combine harvester according to claim 4 **characterised in that** one (75) of the two levers (73, 75) has two projecting wings (78) between which the other lever (73) extends and that a respective spring (79) is arranged between the other lever (73) and each wing (78).

6. A combine harvester according to claim 4 **characterised in that** one (73) of the two levers (73, 75) is in the form of a leaf spring.

7. A combine harvester according to one of the preceding claims **characterised in that** the deformable element of the coupling device includes a damper element (68).

8. A combine harvester according to one of the preceding claims **characterised in that** disposed upstream of the distributor (38) is a nozzle (34) for forming a jet of chopped straw issuing from an outlet opening of the nozzle (34) along a first jet axis, having two guide elements (39, 55) which converge towards the outlet opening in a section plane perpendicular to the axis of the swinging movement and that the freedom of swinging movement includes two positions in which a respective one of two guide elements (39, 55) of the distributor (38), that flank the jet of chopped straw, prolongs an adjacent side wall (35) of the nozzle (34) in the same direction.

9. A combine harvester according to one of the preceding claims **characterised in that** the guide element of the distributor (38) includes two rigidly interconnected side walls (55).

10. A combine harvester according to one of claims 1 to 8 **characterised in that** the guide element of the distributor (38) has two side walls (39) which are pivotable about mutually different axes (40) and which are coupled to respectively pivot in the same direction from a position in mirror-image relationship with each other.

11. A combine harvester according to claim 10 **characterised in that** the angular deflection of the side wall (39) which is placed in the pivotal direction is respectively greater than that of the wall (39) which is in opposite relationship to the pivotal direction.

## Revendications

1. Moissonneuse-batteuse avec un éparpilleur de paille hachée (38) qui comporte un entraînement rotatif (61), un élément de guidage (39, 55, 82, 91, 92) à mouvement pendulaire servant à commander le sens d'éjection de la paille hachée et un dispositif de couplage reliant l'entraînement (61) à l'élément de guidage (39, 55, 82, 91, 92), **caractérisée en ce que** la liberté de mouvement de l'élément de guidage (39, 55, 82, 91, 92) est limitée par des butées (66) et le dispositif de couplage présente un élément déformable (67, 68, 73, 79) qui peut être déformé par la force motrice de l'entraînement rotatif (61) alors que l'élément de guidage (39, 55, 82, 91, 92) se trouve dans une position bloquée par l'une des butées (66).

2. Moissonneuse-batteuse selon la revendication 1, **caractérisée en ce que** l'élément déformable du dispositif de couplage comporte un élément formant ressort (67, 73, 79).

3. Moissonneuse-batteuse selon la revendication 2, **caractérisée en ce que** l'élément formant ressort (67) pouvant être étiré et comprimé de manière élastique est inséré dans une bielle (63) reliant l'entraînement à l'élément de guidage (39, 55, 82, 91, 92).

4. Moissonneuse-batteuse selon la revendication 2, **caractérisée en ce que** le dispositif de couplage comporte deux bras de levier (63, 64 ; 73, 75) pivotants couplés de manière élastique dont un premier (63) a une extrémité libre reliée à l'entraînement (61) et le deuxième (64 ; 75) est mobile entre les butées (66) et a une extrémité libre reliée à l'élément de guidage (39, 55, 82, 91, 92).

5. Moissonneuse-batteuse selon la revendication 4, **caractérisée en ce que** l'un (75) des deux leviers (73, 75) présente deux ailes (78) en saillie entre lesquelles s'étend l'autre levier (73) et **en ce que** respectivement un ressort (79) est disposé entre l'autre levier (73) et chaque aile (78).

6. Moissonneuse-batteuse selon la revendication 4, **caractérisée en ce que** l'un (73) des deux leviers (73 ; 75) est réalisé sous forme de ressort à lames.

7. Moissonneuse-batteuse selon l'une quelconque des revendications précédentes, **caractérisée en ce que** l'élément déformable du dispositif de couplage comprend un élément amortisseur (68).

8. Moissonneuse-batteuse selon l'une quelconque des revendications précédentes, **caractérisée en ce qu'**une buse (34) permettant de former un jet de paille hachée sortant d'une ouverture de sortie de la buse (34) suivant un premier axe de jet avec deux éléments de guidage (39, 55) convergeant dans un plan de coupe perpendiculaire à l'axe du mouvement pendulaire vers l'ouverture de sortie est disposée en amont de l'éparpilleur (38) et **en ce que** la liberté de mouvement pendulaire comprend deux positions dans lesquelles respectivement l'un des deux éléments de guidage (39, 55) de l'éparpilleur (38) jouxtant le jet de paille hachée prolonge une paroi latérale adjacente (35) de la buse (34) dans la même direction.

9. Moissonneuse-batteuse selon l'une quelconque des revendications précédentes, **caractérisée en ce que** l'élément de guidage de l'éparpilleur (38) comporte deux parois latérales (55) reliées l'une à l'autre de manière rigide.

10. Moissonneuse-batteuse selon l'une quelconque des revendications 1 à 8, **caractérisée en ce que** l'élément de guidage de l'éparpilleur (38) présente deux parois latérales (39) pivotant autour d'axes (40) distincts l'un de l'autre qui sont couplées pour pivoter respectivement dans une même direction à partir d'une position énantiomorphe l'une de l'autre.

11. Moissonneuse-batteuse selon la revendication 10, **caractérisée en ce que** la déviation angulaire de la paroi latérale (39) située dans le sens de pivotement est respectivement plus grande que celle de la paroi (39) située dans le sens opposé au sens de pivotement.
